Europäisches Patentamt

European Patent Office

Office européen des brevets

(19)

(11) Veröffentlichungsnummer: **0 190 650**
**A1**

(12) **EUROPÄISCHE PATENTANMELDUNG**

(21) Anmeldenummer: 86101125.2

(22) Anmeldetag: 29.01.86

(51) Int. Cl.⁴: **G 02 B 26/08**
**G 02 B 7/18**
**//F41G7/22**

(30) Priorität: 02.02.85 DE 3503586

(43) Veröffentlichungstag der Anmeldung:
**13.08.86 Patentblatt 86/33**

(84) Benannte Vertragsstaaten:
**DE FR GB NL**

(71) Anmelder: HONEYWELL GMBH
**Kaiserleistrasse 55**
**D-6050 Offenbach am Main(DE)**

(72) Erfinder: Baumann, Rainer, Dipl.-Phys.
**Kilianstätter Strasse 13**
**D-6454 Bruchköbel(DE)**

(72) Erfinder: Khoen Liem, T.
**Am Würgebach 16**
**D-6460 Gelnhausen 4(DE)**

(74) Vertreter: Herzbach, Dieter et al,
**Honeywell Europe S.A. Holding KG Patent- und**
**Lizenzabteilung Kaiserleistrasse 55 Postfach 184**
**D-6050 Offenbach am Main(DE)**

(54) Vorrichtung zur Bildabtastung.

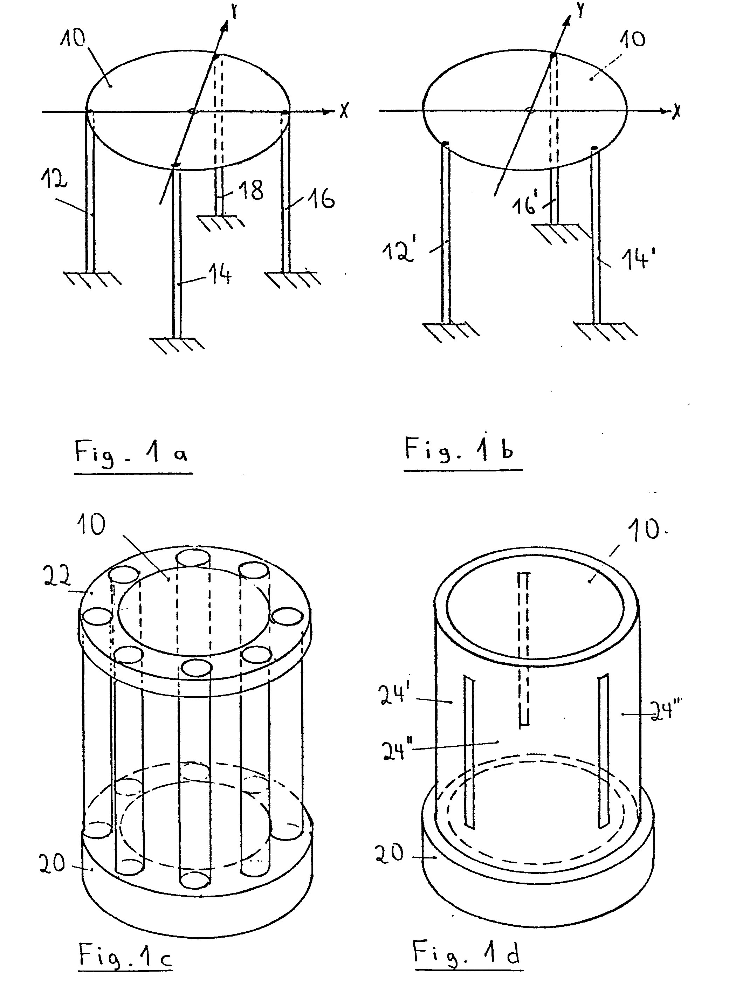

(57) Zur Abtastung eines Gesichtsfeldes in zwei Achsen ist ein Spiegel (10) auf wenigstens drei Stützelementen (12', 14', 16') angeordnet, deren Länge steuerbar ist, so daß durch Verlängerung und Verkürzung der jeweiligen Elemente eine Kippbewegung des Spiegels um eine x-Achse und um eine y-Achse gesteuert erfolgen kann (Fig. 1b).

Fig. 1b

EP 0 190 650 A1

**0190650**

HONEYWELL GMBH

Kaiserleistraße 55

D-6050 Offenbach am Main

28. Januar 1986

77100551 EP

Hz/ep

Vorrichtung zur Bildabtastung

Die vorliegende Erfindung bezieht sich auf eine Vorrichtung zur Abtastung eines Bildes nach dem Gattungsbegriff des Patentanspruches 1.

Eine derartige Vorrichtung ist z.B. in der DE-PS 22 24 217 dargestellt und beschrieben. Dort wird das von einem optischen System erzeugte Bild über ein Abtastsystem auf ein oder mehrere Detektorelemente geworfen, wobei das Abtastsystem einen schnell rotierenden Mehrflächenspiegel zur Horizontalabtastung und einen langsam schwenkbaren Kippspiegel zur Vertikalabtastung umfaßt. Ein derartiges System ist in der Lage, ein TV-kompatibles Bild zu erzeugen.

Die bekannte Abtastvorrichtung ist aber sehr aufwendig und teuer, benötigt viel Raum und ist für extreme Belastungen nicht geeignet.

Es ist daher die Aufgabe der vorliegenden Erfindung, eine derartige Abtastvorrichtung so zu verbessern, daß sie sehr viel billiger herstellbar ist, weniger Raum beansprucht und auch extremen Belastungen standhält. Die Lösung dieser Aufgabe gelingt gemäß den kennzeichnenden Merkmalen des Patentanspruches 1. Weitere vorteilhafte Ausgestaltungen der erfindungsgemäßen Abtastvorrichtung sind den Unteransprüchen entnehmbar.

Anhand von in den Figuren der beiliegenden Zeichnung dargestellten Ausführungsbeispielen sei im folgenden die erfindungsgemäße Abtastvorrichtung beschrieben. Es zeigen:

Figuren 1a bis 1d  verschiedene Ausführungsbeispiele einer erfindungsgemäßen Abtastvorrichtung; und

Figur 2   ein Anwendungsbeispiel der erfindungsgemäßen Abtastvorrichtung.

Gemäß Figur 1a stützt sich ein das Gesichtsfeld abtastender
Spiegel 10 auf vier Stützelementen 12, 14, 16 und 18 ab,
wobei die Stützelemente auf einem Kreis in einem gegenseitigen Winkelabstand von 90° angeordnet sind. Durch Verlängerung eines Stützelementes, z.B. des Stützelementes
14, und durch Verkürzung des gegenüberliegenden Stützelementes, z.B. des Stützelementes 18, bei unveränderter
Länge der verbleibenden Stützelemente, z.B. der Stützelemente 12 und 16, ergibt sich eine Schwenkbewegung  um
die dargestellte x-Achse. In gleicher Weise ergibt sich
eine Schwenkbewegung um die y-Achse, wenn z.B. das Stützelement 12 verkürzt und das Stützelement 16 verlängert
wird, und die Länge der Stützelemente 14 und 18 konstant
bleibt.

Eine Rotation der Kippachsen in der Ebene des Spiegels
10 ist möglich, wenn alle Stützelemente 12 - 18 vorgebbare
Bewegungen ausführen. Es ist leicht erkennbar, daß bei
einer Verlängerung der Stützelemente 12 und 18 und eine
Verkürzung der Stützelemente 12 und 14 um jeweils gleiche
Beträge die Kippachse y  um 45° gedreht wird. Ebenso kann
die Kippachse x  um 45° gedreht werden, wenn z.B. die
Stützelemente 12 und 18 verlängert und die Stützelemente
14 und 16 entsprechend verkürzt werden. Auch dazwischen
sind alle Lagen der Kippachsen möglich, wenn die Verlängerungen und Verkürzungen der Stützelemente entsprechend gesteuert werden.

Prinzipiell genügt gemäß Fig. 1b eine Abstützung des
Spiegels 10 durch drei Stützelemente 12', 14' und 16', die
auf einem Kreis in einem gegenseitigen Winkelabstand von
120° angeordnet sind. Wie man leicht erkennt, kann z.B.
durch Verlängerung des Stützelementes 16' und durch eine Verkürzung der Stützelemente 12' und 14' um jeweils gleiche Beträge eine Kippbewegung um die x-Achse erzeugt werden. Eine Kippbewegung um die y-Achse kann erzeugt werden, indem die Länge des Stützelementes 16' unverändert bleibt und die Länge der Stützelemente 12' und 14' gegenläufig verändert wird.

Figur 1c zeigt eine weitere Ausführungsmöglichkeit, bei der eine Vielzahl von Stützelementen zwischen einer ortsfesten kreisförmigen Grundplatte 20 und einer kreisförmigen Trägerplatte 22 für den Spiegel 10 angeordnet ist. Es bedarf keiner näheren Erläuterung, daß man auch hier durch Verlängerung und Verkürzung der Stützelemente jede gewünschte Abtastbewegung hinsichtlich des Spiegels 10 erzeugen kann.

Gemäß Fig. 1d stützt sich ein in drei oder auch mehr Segmente 24', 24'' und 24''' unterteiltes Rohr 24 wiederum auf einer ortsfesten Grundplatte 20 ab. Auf dem freien Ende des Rohres 24 sitzt der Spiegel 10.

Dieses Rohr 24 besteht ebenso wie die Stützelemente in den vorstehend beschriebenen Ausführungsbeispielen vorzugsweise aber nicht notwendiger Weise aus einem Piezokristall oder einem Stapel solcher Kristalle, wobei derartige elektrisch steuerbare Piezo-Aktuatoren im Stand der Technik bekannt sind. Häufige Vertreter solcher Piezo-Aktuatoren sind der 33-Stapel, der 31-Streifen oder auch das 31-Rohr.

Derartige Piezo-Aktuatoren zeichnen sich durch geringe Kosten, hohe Stellkräfte und hohe Widerstandskraft gegen mechanische Beanspruchungen aus. Durch eine geeignete Spannungsansteuerung der Piezo-Aktuatoren, die unter Umständen in einem Regelkreis mit Wegaufnehmern als Istwertgeber erfolgen kann, läßt sich eine schnelle horizontale Verkippung der x-Achse sowie eine langsame vertikale Verkippung der y-Achse erzeugen.

Ferner kann durch Veränderung der Horizontal- und Vertikalamplitude der Spiegelauslenkung ein Bild-Zoomeffekt erzeugt werden.

Ein bevorzugtes Anwendungsgebiet der erfindungsgemäßen Abtastvorrichtung liegt beispielsweise in einem Zielsuchkopf von endphasengelenkter Munition, die mit einem kleinen, hochbeschleunigten, und schnell rotierenden Flugkörper verschossen wird.

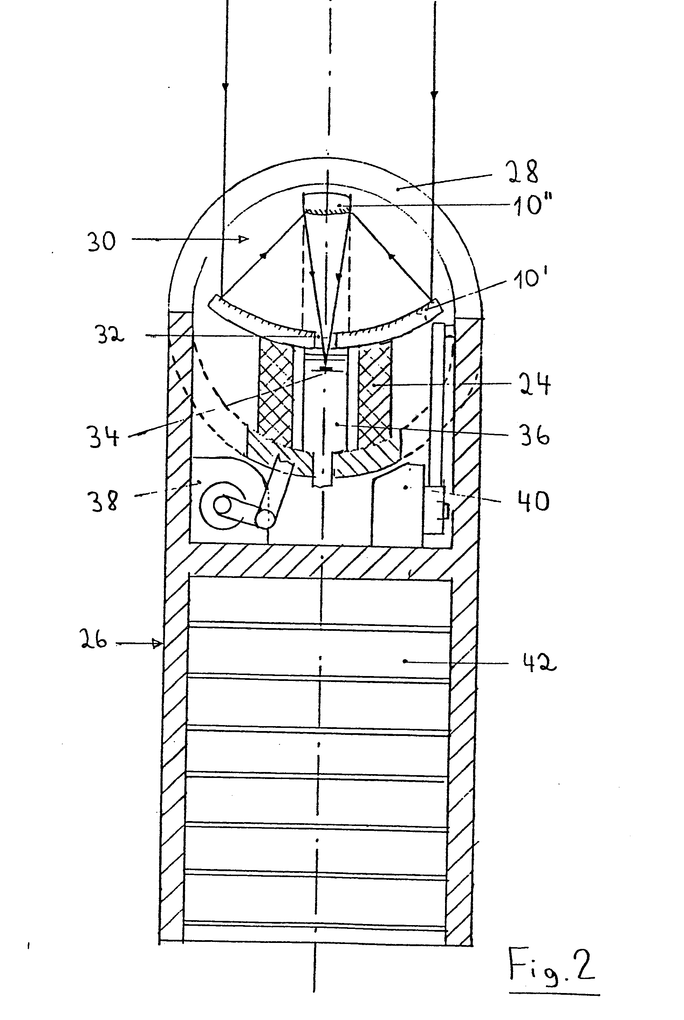

Ein derartiger IR-Suchkopf ist in Fig. 2 dargestellt und soll nachstehend kurz beschrieben werden. Ein zylindrischer Flugkörper 26 ist an seinem vorderen Ende durch einen sphärischen für IR-Strahlen durchlässigen Dom 28 abgeschlossen. Hinter diesem Dom 28 ist als Abbildungsoptik ein Spiegelteleskop 30 gemäß Cassegrain oder Newton angeordnet. Dieses umfaßt einen parabolischen Primärspiegel 10', der sich auf einem segmentierten Piezorohr 24 abstützt. Ein hyperbolischer oder ebener Sekundärspiegel 10'' ist über Stege starr verbunden mit dem Primärspiegel 10'. Der parabolische Primärspiegel 10' weist eine zentrale Ausnehmung 32 auf, in der wenigstens ein IR-Detektor 34 mit zugeordneter Kühleinrichtung 36 angeordnet ist.

Das Spiegelteleskop 30 samt Abtast- und Detektoranordnung ist kardanisch in bekannter Weise gelagert und kann durch zwei Servomotoren 38, 40 um zwei Achsen zusätzlich verstellt werden, um einen einstellbaren Schielwinkel vorzugeben. Zur Auswertung der dem Detektor 34 bei Abtastung des Gesichtsfeldes zugeführten Signale ist hinter dem Suchkopf in dem Flugkörper 26 eine elektronische Auswerteschaltung 42 untergebracht.

Durch ein nicht dargestelltes Inertial-System, z.B. einen Laserkreisel, kann eine Referenz gebildet werden, der gegenüber die Geschoßrotation erfaßt wird. Durch entsprechende elektrische Ansteuerung des Piezorohres 24 ist es bei kleinem Schielwinkel möglich, die Abtastachsen x und y gegenläufig rotieren zu lassen, so daß das abgetastete Gesichtsfeld durch die Geschoßrotation keine Änderung erfährt. Aber auch bei großem Schielwinkel, wenn das Ziel während einer Drehung des Geschosses um seine Längsachse nur in einem bestimmten Winkelbereich aufgefaßt wird, kann durch entsprechende Steuerung der Abtastachsen in der Ebene des Spiegelteleskops der Winkelbereich vergrößert werden, in dem eine Zielauffassung möglich ist. Zur Abtastung des Bildes bzw. Zieles erfolgt selbverständlich zusätzlich zu der Drehung der Kippachsen noch die notwendige Kippbewegung des Spiegels um diese Achsen.

Patentansprüche:

1. Vorrichtung zur Abtastung eines Bildes in zwei Achsen unter Verwendung einer Spiegelanordnung, d a d u r c h g e k e n n z e i c h n e t , daß die Spiegelanordnung aus einem nach Art einer Taumelscheibe gelagerten Spiegel (10; 10', 10'') besteht.

2. Vorrichtung nach Anspruch 1, d a d u r c h g e - k e n n z e i c h n e t , daß der Spiegel (10; 10', 10'') auf mindestens drei Stützelementen (12 - 18, 12' - 16') abgestützt ist, deren Länge kontrolliert steuerbar ist.

3. Vorrichtung nach Anspruch 2, d a d u r c h g e - k e n n z e i c h n e t , daß die Stützelemente durch Piezoelemente vorgegeben sind, welche mit gesteuerten Spannungen beaufschlagt werden.

4. Vorrichtung nach Anspruch 3, d a d u r c h g e - k e n n z e i c h n e t , daß die Stützelemente aus einem 33-Stapelantrieb bestehen.

5. Vorrichtung nach Anspruch 3, d a d u r c h g e - k e n n z e i c h n e t , daß die Stützelemente aus einem 31-Biegeantrieb bestehen.

6. Vorrichtung nach Anspruch 4 oder 5, g e k e n n z e i c h - n e t  d u r c h  eine Vielzahl von auf einem Kreis angeordneten Stützelementen.

7. Vorrichtung nach Anspruch 4 oder 5, g e k e n n - z e i c h n e t  d u r c h  ein in wenigstens drei Elemente (24', 24'', 24''') unterteiltes Piezorohr (24), dessen Elemente potentialmäßig voneinander getrennt sind.

8. Vorrichtung nach Anspruch 2 oder einem der folgenden Ansprüche, g e k e n n z e i c h n e t  d u r c h eine Steuerung der Stützelemente dergestalt, daß um eine erste Achse (x-Achse) eine schnelle und um eine zweite Achse (y-Achse) eine langsame Kippbewegung stattfindet.

9. Vorrichtung nach Anspruch 8, g e k e n n z e i c h - n e t   d u r c h   eine Steuerung der Stützelemente dergestalt, daß die Kippachsen synchron  zueinander im Kreis umlaufen.

10. Vorrichtung nach Anspruch 8 oder 9, g e k e n n - z e i c h n e t   d u r c h   ihre Anordnung in einem rotierenden Flugkörper (26).

11. Vorrichtung nach Anspruch 10, d a d u r c h   g e - k e n n z e i c h n e t , daß zwecks raumfester Bildabtastung die Kippachsen des Spiegels (10, 10'') entgegen der Rotation des Flugkörpers (26) gedreht werden.

12. Vorrichtung nach Anspruch 11, d a d u r c h   g e - k e n n z e i c h n e t , daß die Drehung der Kippachsen nur über einen vorgebbaren Winkelbereich erfolgt.

13. Vorrichtung nach Anspruch 11, g e k e n n z e i c h - n e t   d u r c h   ein Inertialsystem in dem Flugkörper (26) zur Vorgabe einer Referenz, der gegenüber die Rotation gemessen wird.

14. Vorrichtung nach Anspruch 8, g e k e n n z e i c h - n e t   d u r c h   eine Amplitudensteuerung der Kippbewegung zur Erzeugung eines Zoomeffektes.

15. Vorrichtung nach Anspruch 8, d a d u r c h   g e - k e n n z e i c h n e t , daß der Spiegel als parabolischer Primärspiegel (10') eines Spiegelteleskops (30) ausgebildet ist, in dessen Brennpunkt wenigstens ein Detektorelement (34) angeordnet ist.

Fig. 1a

Fig. 1b

Fig. 1c

Fig. 1d

2/2

0190650

Fig.2

## Europäisches Patentamt

## EUROPÄISCHER RECHERCHENBERICHT

| | EINSCHLÄGIGE DOKUMENTE | | EP 86101125.2 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - B - 1 923 032 (COMPAGNIE)<br>* Ansprüche 1,2,7; Fig. 1,4 *<br>-- | 1-5 | G 02 B 26/08<br>G 02 B 7/18<br>/F 41 G 7/22 |
| X | DE - A1 - 3 027 971 (DUAL)<br>* Fig. 1-4; Seite 2, Absatz 1 *<br>-- | 1-5 | |
| P,X | US - A - 4 533 219 (ALDRICH)<br>* Fig. 1,2; Spalte 1, Zeilen 5-24 * | 1-6 | |
| A | | 9,10 | |
| | -- | | |
| X | DE - C - 1 406 578 (BODENSEEWERK)<br>* Fig. 1,2,15-17,19; Spalte 4, Zeile 66 - Spalte 5, Zeile 5 * | 1 | |
| A | | 10,15 | RECHERCHIERTE SACHGEBIETE (Int. Cl.4) |
| | -- | | |
| A | US - A - 4 339 097 (KORDULLA)<br>* Gesamt *<br>-- | 10,15 | G 02 B 26/00<br>G 02 B 7/00<br>F 41 G 7/00 |
| A | DE - B2 - 2 647 646 (GENERAL DYNA-MICS)<br>* Gesamt; insbesondere Fig. 4 *<br>---- | 1,10-13,15 | H 04 N 3/00<br>F 42 B 15/00 |

Der vorliegende Recherchenbericht wurde für alle Patentansprüche erstellt.

| Recherchenort | Abschlußdatum der Recherche | Prüfer |
|---|---|---|
| WIEN | 16-05-1986 | GRONAU |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82